# EUROPEAN PATENT APPLICATION

(11) **EP 2 389 030 A1**
(43) Date of publication of application: **23.11.2011**
(21) Application number: 11275085.6
(22) Date of filing: 20.05.2011
(51) Int. Cl.: H04W 28/10, H04W 76/04

(54) **Reducing signalling load in a network controller**

(30) Priority: 21.05.2010 ES 201030765
(71) Applicant: Vodafone Group PLC, Newbury Berkshire RG14 2FN (GB); Vodafone España, S.A.U., 28108 Alcobendas (ES)
(72) Inventor: De Pasquale, Andrea, E-28050, Madrid (ES); Dominguez Romero, Francisco, E-28050, Madrid (ES)
(74) Representative: Keston, David Arthur

(57) **Abstract**

Network element and method for reducing the signalling load in a RNC of a mobile network. The network element comprises a monitoring controller for monitoring the signalling processing load in the RNC and a control unit for, when said signalling processing load exceeds a determined threshold, modifying the value of at least one parameter related to the generation of signalling messages. This way the number of signalling messages dealt by the RNC, and therefore the processing load, are reduced, while not impacting directly the perception of the mobile network user.

## Description

### Technical Field

The present invention is comprised within the field of mobile telecommunications, and more specifically in a network element, method and system for reducing the signalling load in a network controller element (e.g. RNC) of a cellular telecommunications network.

### Background Art

In the current 3G networks there is an increase in the number of smartphones. All such devices facilitate new applications intended to be connected to the Internet, social networks, instant messaging, e-mail on the phone, etc. Many of these applications are not consuming a lot of data but they are always running and connected with a PDP (Packet Data Protocol) context open with often connections and disconnections sending some packets to update the application.

This is starting to cause a problem in the RNC signalling managing capacity as there are many requests, reconfigurations, connections, setup, disconnections and this causes an increase in the load of the data processing units (CPU load) at the RNC.

Moreover, some of the new mobile terminals (or user equipment, UE) are able to update their software online: as a result it is possible for thousands of mobile terminals suddenly to exhibit new behaviour in the network which can lead to a big problem to the 3G networks, in special the RNC capacity.

When the CPU load (in the RNC) exceeds a certain threshold, then current implementations start to reject new connections to maintain system stability.

The present invention solves the mentioned problems by providing a system and method aimed to reduce signalling load in the RNC, so that the processing load of the CPU in the RNC is substantially reduced and at the same time, minimising the impact in the customers.

The field of mobile telephony is notorious for its use of abbreviations and acronyms. Below is a glossary of acronyms/terms used throughout the present specification:
- 3G: 3rd Generation
- CS: Circuit Switching
- DCH: Dedicated Channel
- FACH: Forward Access Channel
- HSUPA: High-Speed Uplink Packet Access
- NBAP: Node B Application Part
- PA: Power Amplifier
- PCH: Paging Channel
- PS: Packet Switching
- RANAP: Radio Access Network Application Part
- RNC: Radio Network Controller
- RRC: Radio Resource Control
- SHO: Soft Handover
- UE: User Equipment

### Summary of invention

In accordance with one aspect of the invention, there is provided a method for reducing the signalling load in a network controller element, such as an RNC in 3G technologies, BSC in GSM, BSC/PCF in CDMA technologies and finally the eNodeB in LTE which performs also controller functions, of a cellular telecommunications network. The method comprises monitoring the signalling processing load in the network controller element and when said signalling processing load exceeds a determined threshold, modifying the value of at least one parameter related to the generation of signalling messages so as to reduce the number of signalling messages dealt by the network controller element.

Most of the parameters and procedures named in this invention are based in the 3G/UMTS Standards, but the invention can be applicable to rest of the technologies above and implemented in the radio controller entity.

The parameter (or parameters) can be related to any of the following type of signalling messages: RANAP signalling messages; NBAP signalling messages; RRC signalling messages.

In a preferred embodiment one of the at least one parameters is a parameter employed in the dedicated channels reconfiguration of a user equipment due to traffic volume. Said dedicated channel reconfiguration parameter can include the time period necessary for applying the reconfiguration on the dedicated channels when certain throughput conditions of the user equipment are met during said time period. The dedicated channel reconfiguration parameter can also include the throughput threshold of the user equipment established to change from one dedicated channel to another.

In another embodiment one of the at least one parameters is a parameter employed in the change of RRC state of a user equipment. The RRC state change parameter preferably includes the throughput threshold of the user equipment established to change from Cell_DCH state to Cell_FACH state. The RRC state change parameter can also include the time period necessary for applying the change of the RRC state of said user equipment when certain throughput conditions of the user equipment are met during said time period. The method can further comprise detecting the user equipments which are changing RRC states with a frequency higher than a predetermined frequency, so that the modification of the time period for changing to another RRC state is applied only to said user equipments.

In yet another preferred embodiment the parameter includes the periodicity of transmission of Node B measurement reports to the RNC.

In another embodiment one of the at least one parameter can also be a parameter employed in the change of configurations of the mobility procedures. The mobility configuration parameter preferably includes the active set size parameter of a user equipment, said parameter determining the maximum number of cells simultaneously connected to the user equipment. The parameter can also include the time to trigger parameter for mobile procedures.

In yet another embodiment the method further comprises monitoring the throughput of the user equipments connected to the RNC and when a user equipment is in CELL_DCH state and its throughput is equal to 0 during a predetermined period of time, disabling the Cell_FACH state of said user equipment to allow a change of the RRC state of said user equipment directly to Cell_PCH/URA_PCH or idle state.

It should be observed that some or all the different embodiments can be simultaneously applied.

In accordance with a further aspect of the invention, there is provided a network controller element a cellular telecommunications network, the network controller element having a processor for processing signals within the cellular telecommunications network, a monitoring controller configured for monitoring the signalling processing load in the network controller element and a control unit configured for, when said signalling processing load exceeds a determined threshold, modifying the value of at least one parameter related to the generation of signalling messages so as to reduce the number of signalling messages received by the network controller element for processing.

In a preferred embodiment of the network element, the monitoring controller is further configured to monitor the throughput of the user equipments connected to the RNC, and the control unit is further configured to disable, when a user equipment is in CELL_DCH state and its throughput is equal to 0 during a predetermined period of time, the Cell_FACH state of said user equipment to allow a change of the RRC state of said user equipment directly to Cell_PCH/URA_PCH or idle state

The same embodiments applied to the method can also be conveniently applied to the network element, the control unit being in that case configured to use some or all of the different types of parameters used for the method.

### Brief description of drawings

A series of drawings which aid in better understanding the invention and which are expressly related with an embodiment of said invention, presented as a non-limiting example thereof, are very briefly described below.
Figure 1 shows the signalling protocols between the different elements of the mobile network, according to the state of the art: NBAP, RANAP and RRC.
Figure 2 shows an example of channel reconfigurations carried out on a UE, according to the state of the art.
Figure 3 shows the messages transmitted for each channel reconfiguration, according to the state of the art.
Figure 4 shows an example of a change in the RRC state of a UE, moving from DCH to PCH.
Figure 5 shows the transitions of RRC states, for the example of Figure 4, according to a preferred embodiment.
Figure 6 represents, according to the mobility procedures, the CPICH Ec/No signal to consider the inclusion of a new cell in the active set.
Figure 7 shows the message flow in an active set update, as the one shown in Figure 6.

### Description of embodiments

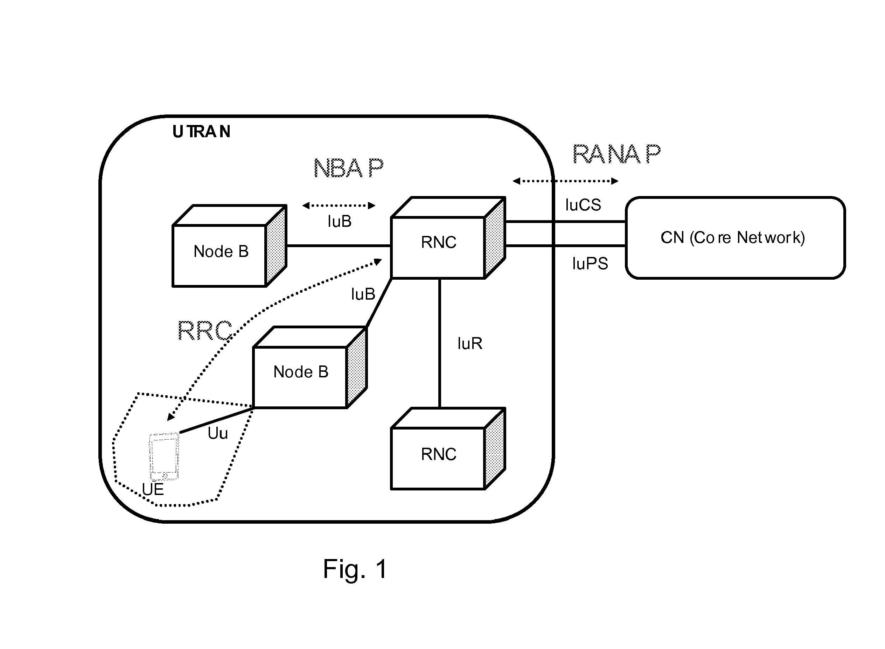

There are many signalling messages arriving at (and originating from) the RNC, as shown in **Figure 1**. They include:
- RANAP (Radio Access Network Application Part) signalling protocol messages: signalling messages between the RNC and the Core Network (lu interface).
- NBAP (Node B Application Part) messages: signalling messages between Node B and the RNC (lub interface) to setup, modify, control the Node B resources.
- RRC (Radio Resource Control) messages: signalling messages from the RNC to the UEs to configure, handover, setup, release channels, etc.

Some of the messages are critical as they are coming from UE, Node B or Core Network and need to be processed because otherwise there is a direct customer impact (e.g. a voice call can be dropped).

However, there are other messages that are generated by the RNC in order to optimise the radio interface or the transport connections or enhance the user perception, but they are not critical to maintain alive the connections.

It is then necessary to reduce the number of messages and actions taken by the RNC when exceeding certain limit (a threshold) of the signalling CPU load.

There are several actions which can be taken when exceeding the threshold:

### 1. Dedicated Channels (DCH) reconfigurations due to traffic volume

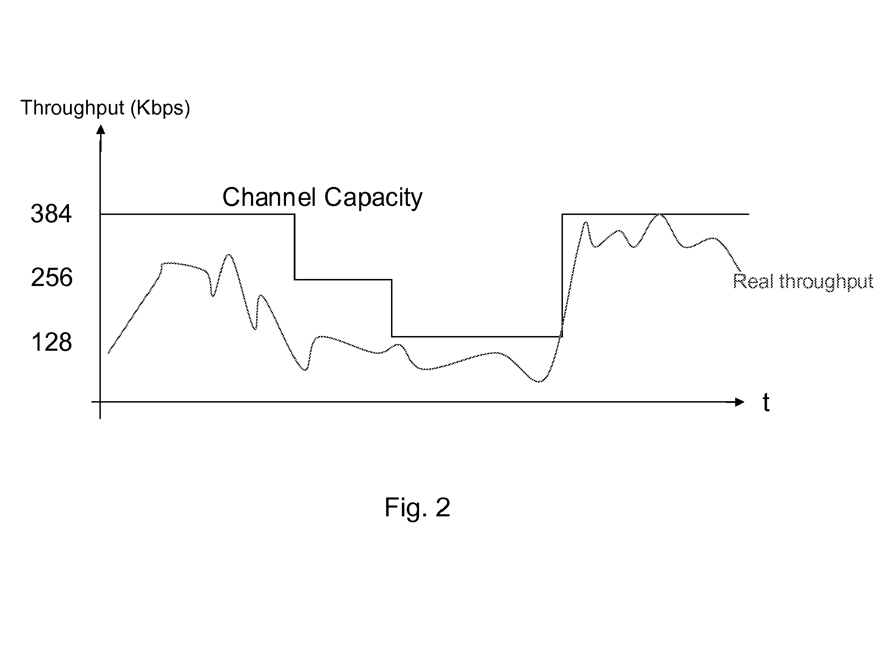

When using dedicated channels (DCH) the capacity of each channel is changed over time according to the data volume transmitted/received by the UE. An example of the different channels reconfigurations according to the throughput of the UE is shown in **Figure 2**. These reconfigurations are done in order to optimise the use of the resources at the lub, and Uu (radio interface).

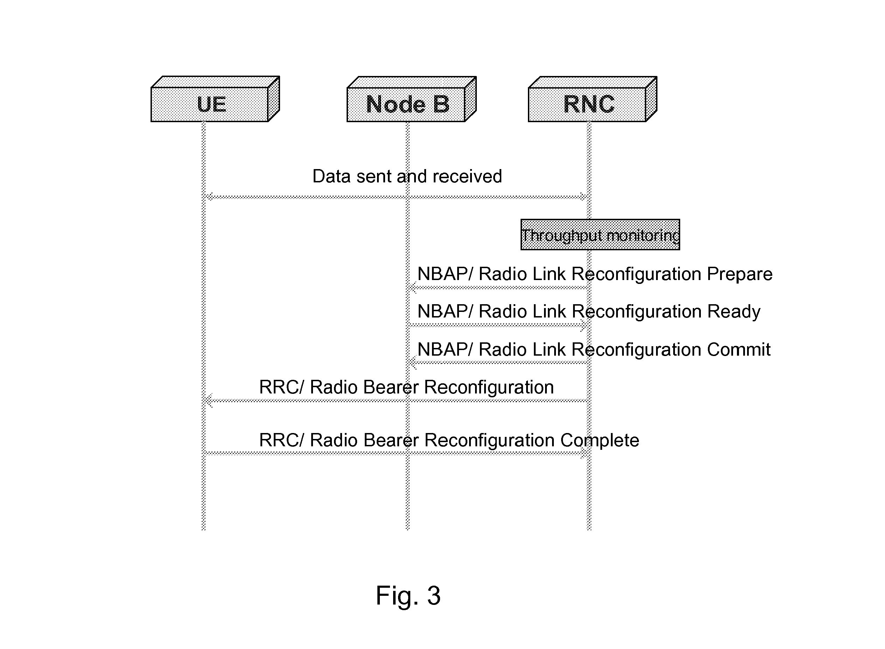

Every reconfiguration is associated with the transmission of a quantity of messages as shown in **Figure 3**.

When the load threshold is exceeded, the timers and configuration for these changes will be such that the reconfigurations between different DCHs are avoided. By doing this there is a corresponding reduction in some RRC messages with the UE and in some NBAP messages to reconfigure the channel with the Node B.

The parameters involved in the channel reconfiguration are:
- Throughput threshold: there are different thresholds to change from one channel to another depending upon the capacity of the DCHs involved. For example, to go from 384 Kbps to 256 Kbps channel, it can be defined a threshold of 200 Kbps. This implies that if the throughput goes beyond 200 Kbps, the channel will be reconfigured.
- Timer: there is a timer to measure the throughput in order to take the decision of the reconfiguration. Following the previous example, the reconfiguration decision has to be taken when the throughput is under 200 Kbps *during the last* x *seconds* (x being configurable by the operator).

The action taken to reduce the number of messages is to change at least one of these parameters. The timer can be set longer than usual. For example, 3 minutes, that means there is no reconfiguration until 3 minutes of throughput threshold fulfilment.

The dedicated channels reconfiguration can be done independently for uplink and downlink, therefore different parameters are needed for both links.

### 2. Adaptive timers based on UE connectivity

Similar to the previous dedicated channel reconfigurations, it is possible also to change the RRC state when the throughput is very small. The states in the RRC connected mode are basically, in order of decreasing throughput, CELL_DCH (Dedicated Channel with UE location knowledge at cell level), CELL_FACH (Forward Access Channel at cell level), and CELL_PCH (Cell Paging Channel at cell level) and URA_PCH (PCH state with UE located at UTRAN Registration Area level). The transitions to lower throughput states occur when *inactivity timers trigger.* Let's call T1 timer the one controlling transition from DCH to FACH, the T2 timer controls transition from CELL_FACH to CELL_PCH/URA_PCH, and the T3 timer controls transition from CELL_PCH/URA_PCH to idle mode (no Radio connection).

The user which is in dedicated state with low throughput can be passed to a common channel state (Cell_FACH) or to a PCH state in case the throughput is 0.

Again the parameters to be passed from one state to the other are:
- Throughput threshold from Cell_DCH to Cell_FACH. This throughput condition must be fulfilled for both uplink and downlink as the Cell_FACH channel is low capacity for both links. Then, to pass to PCH state (URA or Cell) the throughput must be 0 as it is not possible to transmit any data in these states.
- Timer: there is a timer to measure the throughput in order to take the decision of the reconfiguration.

In case the RNC load is very high the action is to change timers so that the UE will stay longer in DCH, FACH or PCH states.

Optionally, these new values for the timers can be applied only to those UEs with more state changes (e.g. UEs changing state more than x times per 10 minutes will be applied a different set of timers).

### 3. RRC state changes reduction

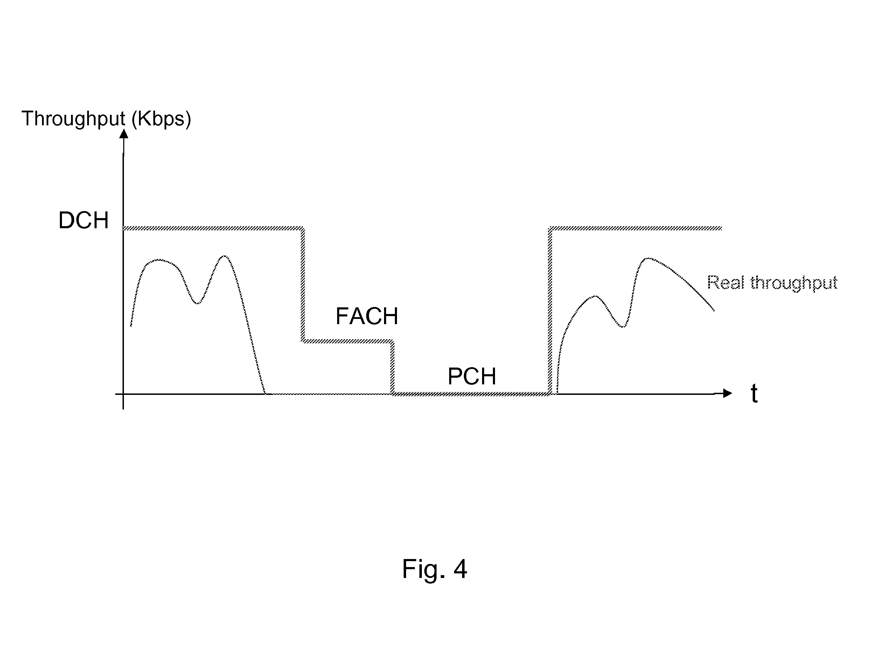

When the UE stops the transmission/reception for data traffic, then it is normally moved to Cell-FACH state and then to Cell_PCH/URA_PCH and/or idle state, as shown in **Figure 4**. All these changes produce quantity of signalling messages.

Typically if the throughput is lower than a value (for example 8 Kbps) then it is moved to Cell_FACH. This is a common channel with shared capacity between many users. Then if the throughput is 0 kbps during a certain period of time, the UE is moved to PCH or idle state. These throughputs thresholds must be fulfilled for both uplink and downlink simultaneously.

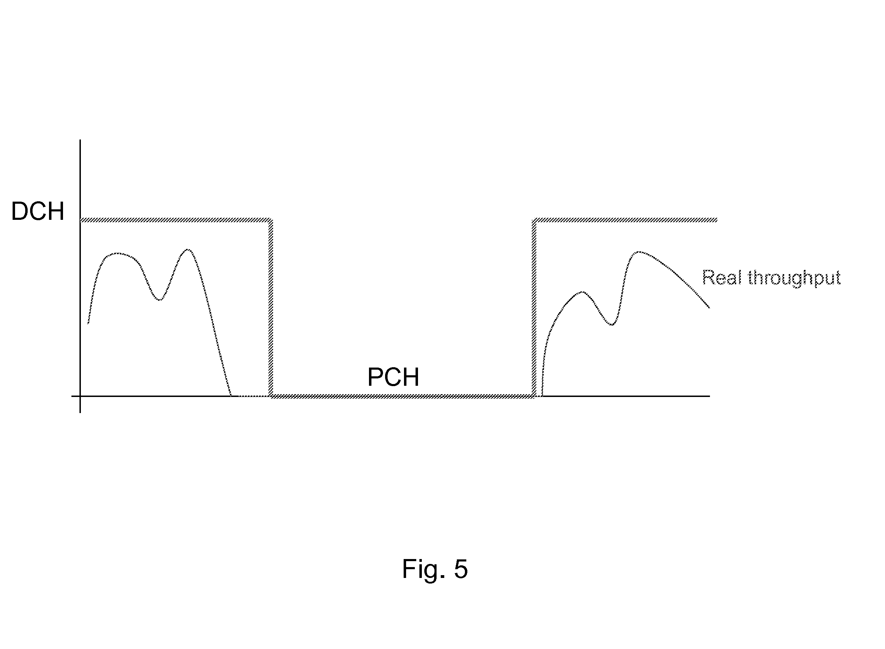

According to another embodiment, when the UE throughput is equal to 0 during a predetermined period of time, the Cell_FACH state can be disabled (through a change in parameterisation) and then the UE is moved directly to the final state (idle or Cell_PCH/URA_PCH) in order to reduce a number of messages even if the quality perceived by the customer when coming back to transmit is not optimised (when removing Cell_FACH state in the transitions the resume of the connection will take 1 second instead of ∼100 ms). In this case, signalling capacity is traded off against UE perceived quality. With the new action the transitions of RRC states, for the example of Figure 4, would be as shown in **Figure 5**.

### 4. NBAP monitoring measurements period increase

There are a number of messages received by the RNC from the Node B with measurement reports about the different resources: power, UL RSSI, baseband occupation, etc. Many of them are periodic reporting measurements. For example the power used in the PA (Power Amplifier) of the Node B is reported typically every 500 ms to the RNC. The RNC knows the status of the load of the PA and then it can take actions in the admission or congestion control.

The proposal is to change the periodicity of the reports in order to receive fewer amounts of messages in the RNC; RRM algorithms will keep working fine although will be a bit less reactive.

For example, the power used in the PAs can be transmitted every 2 seconds instead of 500 ms. In this way the amount of messages is reduced by 4 times.

### 5. Reduce the number of mobility and handover procedures messages

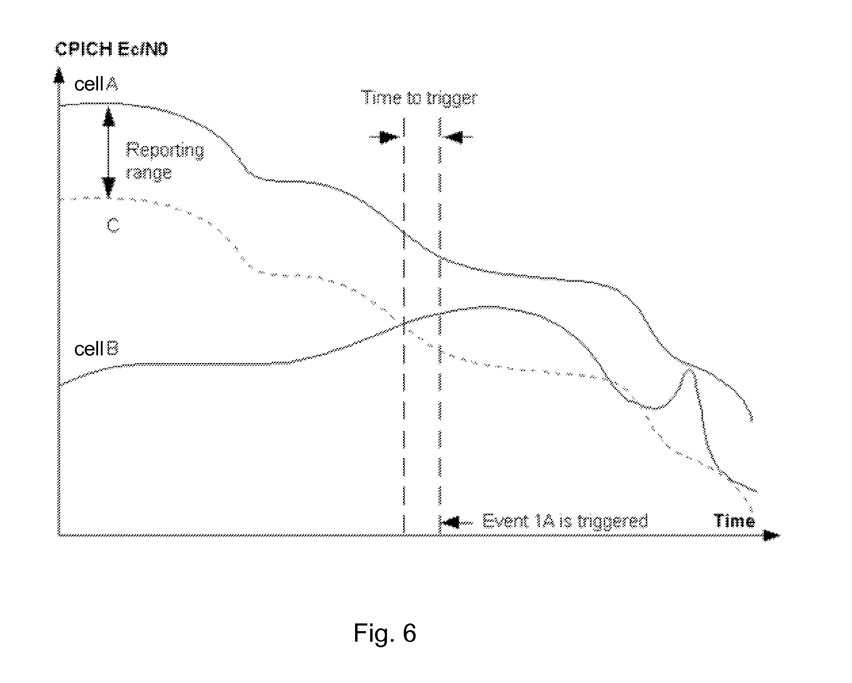

Other important part of the messages and actions taken by the RNC is the mobility procedures, i.e. to do handover from one cell to another cell of the network. **Figure 6** shows the CPICH Ec/No signal (this is basically the signal-to-noise ratio used for representing the "cell quality" for handover evaluation; Ec/No is a measure of signal strength obtained by dividing RSCP -Received Signal Code Power- by RSSI -Received Signal Strength Indication-) to consider the cell B to be included in the active set. The active set is defined as the set of cells the UE is simultaneously connected to (i.e., the cells currently assigning downlink Dedicated Channel to the UE constitute the active set). There is a reporting range (in dB), and a Time to Trigger parameter. If a new cell Ec/No signal is becoming higher than the Ec/No of the serving cell (cell A) minus the reporting range during the Time To Trigger ms, then the new cell is included in the active set.

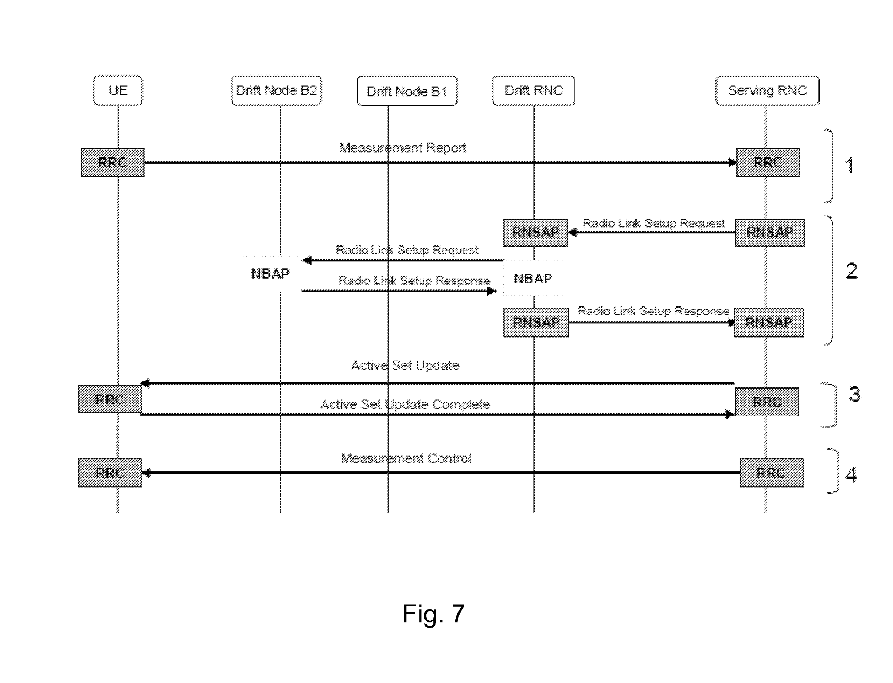

The message flow in every active set update is shown in **Figure 7**. In order to avoid so many messages it is possible to change the configurations of the mobility procedures. This should be done when the RNC load exceeds a threshold change configuration for soft handover - SHO (for DCH of HSUPA):
- Reducing active set size. That means there is a maximum number of cells to be included simultaneously. Typically this is 3. It could be reduced to 2 or 1. That means only 2 cells (or 1) are connected to the UE simultaneously.
- Changing Time to Trigger parameter (explained in Figure 6) to reduce the number of active set updates. The Time to Trigger parameter would be longer than usual. Typically is 128 ms, this could be increased up to 320 ms or 640 ms. This should preferably be applied only for PS traffic as the call drop rate could increase and this has a little impact in PS quality customer perception (because the UE can reconnect automatically without any customer action) but high impact in CS voice quality.

### 6. RRC Connection Reject to selected UE

If the UE goes to idle very often (continuous connections and disconnections), it will be possible to apply a penalty for admission: it is sent a RRC Connection Reject to avoid the setup of any channel for this kind of users.

One way of measuring this would be counting the number of Radio Bearer Setup during the last minutes. If the number is higher than a threshold this UE is in admission penalty. Another way to determine the appliance of the admission penalty could be done by counting the number of RRC connections established during the last minutes.

In general, there would be parameter changes to a conservative configuration for messages reduction assuming some performance non-optimised behaviour in the Radio Interface.

This last action should be configurable per domain, i.e. typically it should be done only for PS connections allowing the CS connection to be processed.

All these actions can be programmed in the RNC which is the network element with control of all the algorithms. It is a logical node in charge of controlling the use and the integrity of the radio resources. There is only one controlling RNC for any Node B. The controlling RNC has the overall control of the logical resources of its node B's.

## Claims

1. Method for reducing the signalling load in a network controller element of a cellular telecommunications network, **characterized in that** it comprises:
monitoring the signalling processing load in the network controller element;
when said signalling processing load exceeds a determined threshold, modifying the value of at least one parameter related to the generation of signalling messages so as to reduce the number of signalling messages dealt by the network controller element.

2. Method according to claim 1, wherein the at least one parameter is related to any of the following type of signalling messages:
RANAP signalling messages;
NBAP signalling messages;
RRC signalling messages.

3. Method according to any of claims 1 to 2, wherein one of the at least one parameters is a parameter employed in the dedicated channels reconfiguration of a user equipment due to traffic volume.

4. Method according to claim 3, wherein the dedicated channel reconfiguration parameter includes the time period necessary for applying the reconfiguration on the dedicated channels when certain throughput conditions of the user equipment are met during said time period.

5. Method according to any of claims 3 to 4, wherein the dedicated channel reconfiguration parameter includes the throughput threshold of the user equipment established to change from one dedicated channel to another.

6. Method according to any of claims 1 to 5, wherein one of the at least one parameters is a parameter employed in the change of RRC state of a user equipment.

7. Method according to claim 6, wherein the RRC state change parameter includes the throughput threshold of the user equipment established to change from Cell_DCH state to Cell_FACH state.

8. Method according to any of claims 6 to 7, wherein the RRC state change parameter includes the time period necessary for applying the change of the RRC state of said user equipment when certain throughput conditions of the user equipment are met during said time period.

9. Method according to claim 8, further comprising detecting the user equipments which are changing RRC states with a frequency higher than a predetermined frequency, and wherein the modification of the time period for changing to another RRC state is applied only to said user equipments.

10. Method according to any of claims 1 to 9, further comprising:
monitoring the throughput of the user equipments connected to the RNC;
when a user equipment is in CELL_DCH state and its throughput is equal to 0 during a predetermined period of time, disabling the Cell_FACH state of said user equipment to allow a change of the RRC state of said user equipment directly to Cell_PCH/URA_PCH or idle state.

11. Method according to any of claims 1 to 10, wherein the at least one parameter includes the periodicity of transmission of Node B measurement reports to the RNC.

12. Method according to any of claims 1 to 11, wherein one of the at least one parameter is a parameter employed in the change of configurations of the mobility procedures.

13. Method according to claim 12, wherein the mobility configuration parameter includes the active set size parameter of a user equipment, said parameter determining the maximum number of cells simultaneously connected to the user equipment.

14. Method according to any of claims 12 to 13, wherein the mobility configuration parameter includes the time to trigger parameter for mobile procedures.

15. A network controller element in a cellular telecommunications network, the network controller element having:
a processor for processing signals within the cellular telecommunications network,
**characterized in that** the network controller element further comprises:
a monitoring controller configured for monitoring the signalling processing load in the network controller element; and
a control unit configured for, when said signalling processing load exceeds a determined threshold, modifying the value of at least one parameter related to the generation of signalling messages so as to reduce the number of signalling messages received by the network controller element for processing.
